# EUROPÄISCHE PATENTANMELDUNG

(11) **EP 3 403 548 A1**
(43) Veröffentlichungstag der Anmeldung: **21.11.2018**
(21) Anmeldenummer: 17171732.5
(22) Anmeldetag: 18.05.2017
(51) Int. Cl.: A47J 31/44

(54) **BRÜHVORRICHTUNG ZUM ZUBEREITEN EINES HEISSGETRÄNKS UND ZUGEHÖRIGES VERFAHREN**

(71) Anmelder: JURA Elektroapparate AG, 4626 Niederbuchsiten (CH)
(72) Erfinder: REYHANLOO, Shahryar, 6405 Immensee (CH); BÜTTIKER, Philipp, 4625 Oberbuchsiten (CH)
(74) Vertreter: EGLI-EUROPEAN PATENT ATTORNEYS

(57) **Zusammenfassung**

Es werden eine Brühvorrichtung (1) zum Zubereiten eines Heissgetränks und ein zugehöriges Verfahren angegeben. Die Brühvorrichtung (1) weist eine Heisswasser-Zuführungseinrichtung (12, 15, 16, 20), eine Brüheinheit (31), konfiguriert zum Entgegennehmen von Heisswasser von der Heisswasser-Zuführungseinrichtung (12, 15, 16, 20) und zum Ausgeben eines gebrühten Heissgetränks in einen Heissgetränkeauslass (65), eine Heisswasser-Umgehungsleitung (40), konfiguriert zum Ausgeben von Heisswasser aus der gleichen Heisswasser-Zuführungseinrichtung (12, 15, 16, 20) in den Heissgetränkeauslass (65), eine ansteuerbare Heisswasser-Umschalteinrichtung (50, 50A), die dazu konfiguriert ist, die Heisswasser-Umgehungsleitung (40) zeitweise mit der Heisswasser-Zuführungseinrichtung (12, 15, 16, 20) zu verbinden, und eine Ansteuereinheit zum Ansteuern der Heisswasser-Umschalteinrichtung (50, 50A) auf.

## Beschreibung

### Technisches Gebiet

Die vorliegende Offenbarung betrifft eine Brühvorrichtung zum Zubereiten eines Heissgetränks, insbesondere einen Kaffeeautomaten zum Zubereiten eines Kaffeegetränks.

### Stand der Technik

In Brühvorrichtungen zum Zubereiten eines Heissgetränks wird heisses Wasser einer Brüheinheit zugeführt, in welcher das heisse Wasser einen Geschmacksträger (beispielsweise Kaffeepulver) durchläuft und an einem Heissgetränkeauslass als zubereitetes oder gebrühtes Heissgetränk ausgegeben wird.

Insbesondere bei Kaffee gibt es regionale oder kulturelle Unterschiede in der Zubereitungsart. So unterscheiden sich die persönlichen Präferenzen insbesondere in Bezug auf die Menge des eingesetzten Kaffeepulvers oder in Bezug auf die Portionsgrösse des Heissgetränks. Wenn der Kaffee in einer eher grösseren Portion zubereitet wird, kann die Einfüllmenge von gemahlenem Kaffeepulver in die Brüheinheit variiert werden. Beim Bezug eines sehr grossen Kaffees wird diese Menge in der Regel bis auf ein maximales Fassungsvolumen des betreffenden Teils der Brühkammer erhöht.

Beim Kaffeebezug werden zu Beginn vor allem erwünschte Geschmacksstoffe und Aromen ausgetragen. Bei zunehmender Bezugsdauer wird der Kaffee wässriger, und es können unerwünschte Bitterstoffe gelöst werden.

Aus dem Stand der Technik sind Brühvorrichtungen bekannt, bei welchen zwei Heizsysteme vorhanden sind, d. h. zwei Durchlauferhitzer, denen jeweils eine eigene Förderpumpe und stromabwärts jeweils ein Fluidstrang zugeordnet sind. Eine solche herkömmliche Brühvorrichtung offenbart beispielsweise die WO 2011/151703 A2. Die beiden Heizsysteme werden während eines Kaffeebezugs parallel betrieben. Mit einem Fluidstrang wird der Brüheinheit heisses Wasser zugeführt, während mit dem anderen Fluidstrang gleichzeitig heisses Wasser erzeugt wird, das stromabwärts der Brüheinheit in den Kaffeeauslauf gemischt wird.

Durch die zwei Heizsysteme wird die herkömmliche Brühvorrichtung teuer, und der Platzbedarf steigt.

### Zusammenfassung der Offenbarung

Es ist eine Aufgabe der vorliegenden Offenbarung, eine Brühvorrichtung oder ein Verfahren, welches eine Brühvorrichtung verwendet, derart weiterzubilden, dass die Brühvorrichtung preiswerter wird oder der Platzbedarf verringert wird.

Die Aufgabe wird gelöst durch eine Brühvorrichtung nach Anspruch 1 oder ein Verfahren nach Anspruch 12.

Gemäss einem Aspekt weist eine Brühvorrichtung zum Zubereiten eines Heissgetränks eine Heisswasser-Zuführungseinrichtung, eine Brüheinheit, konfiguriert zum Entgegennehmen von Heisswasser von der Heisswasser-Zuführungseinrichtung und zum Ausgeben eines gebrühten Heissgetränks in einen Heissgetränkeauslass, eine Heisswasser-Umgehungsleitung, konfiguriert zum Ausgeben von Heisswasser aus der gleichen Heisswasser-Zuführungseinrichtung in den Heissgetränkeauslass, eine ansteuerbare Heisswasser-Umschalteinrichtung, die dazu konfiguriert ist, die Heisswasser-Umgehungsleitung zeitweise mit der Heisswasser-Zuführungseinrichtung zu verbinden, und eine Ansteuereinheit zum Ansteuern der Heisswasser-Umschalteinrichtung auf. Die Brühvorrichtung ist insbesondere als Kaffeeautomat ausgebildet.

Die Heisswasser-Umgehungsleitung, oder Bypass-Leitung, führt damit auf ansteuerbare oder schaltbare Weise Heisswasser aus der gleichen Heisswasser-Zuführungseinrichtung, die auch die Brüheinheit speist, dem Heissgetränkeauslass zu. Es ist dadurch möglich, gegenüber der herkömmlichen Brühvorrichtung die Kosten der Brühvorrichtung zu senken oder den Platzbedarf zu verringern. Gleichzeitig kann sichergestellt werden, dass insbesondere bei einer grossen Portionsgrösse des zuzubereitenden Heissgetränks auf ansteuerbare Weise nicht zu viel Heisswasser durch die Brüheinheit geleitet wird. Hierdurch kann die Qualität des zuzubereitenden Heissgetränks beibehalten oder verbessert werden; insbesondere kann bei der Bereitung eines Kaffeegetränks sichergestellt werden, dass nur wenige oder keine Bitterstoffe aus dem Kaffeepulver gelöst werden.

Mit anderen Worten: Es kann bei einer zuzubereitenden grossen Heissgetränkeportion sichergestellt werden, dass eine geringere Heisswassermenge als die Gesamtportionsgrösse durch die Brüheinheit geleitet wird, ohne zusätzliche Teile wie z. B. ein zweites Heizsystem vorzusehen. Es fliesst also im Falle einer Kaffeezubereitung weniger erwärmtes Wasser durch das (in der Brüheinheit befindliche) gemahlene Kaffeepulver, wodurch eine Überextraktion von Aromastoffen vermieden werden kann und die Abgabe von Bitterstoffanteilen in den zubereiteten Kaffee verringert wird. Dadurch können erwünschte Geschmacksstoffe und Aromen während des Brühvorganges ausgetragen werden und keine oder nur eine geringe Menge an unerwünschten Bitterstoffe gelöst werden. Gleichzeitig ist es möglich, eine ausreichend grosse Portion am Heissgetränkeauslass zu erhalten.

Die Heisswasser-Zuführungseinrichtung ist beispielsweise als eine Kombination aus einem Kaltwasserspeicher, einer Förderpumpe und einem Durchlauferhitzer ausgebildet, aber nicht darauf beschränkt. Alternativ ist es beispielsweise auch möglich, Heisswasser in einem Heisswassertank oder Boiler zu speichern, und das erwärmte Wasser mit einer Förderpumpe zu fördern. In jedem Fall steht an einem Ausgang der Heisswasser-Zuführungseinrichtung das erwärmte Wasser zur Verfügung, das mittelbar oder unmittelbar in die Brüheinheit gefördert werden kann, und das mittelbar oder unmittelbar in die Heisswasser-Umgehungsleitung gefördert werden kann, und zwar abhängig von einem Umschaltzustand der Heisswasser-Umschalteinrichtung.

Heisswasser, wie hierin verwendet, bezieht sich auf Wasser mit einer zum Zubereiten des gewünschten Heissgetränks geeigneten Temperatur, beispielsweise Kaffee-Brühtemperatur. Typische Brühtemperaturen betragen mehr als 90 °C, insbesondere mehr als 95 °C.

Gemäss einem weiteren Aspekt ist die Heisswasser-Zuführungseinrichtung dazu konfiguriert, Heisswasser aus einer einzigen Heisswasserquelle zu fördern. Die Heisswasserquelle ist beispielsweise der oben erwähnte Heisswassertank oder Boiler, oder die Heisswasserquelle ist der Ausgang des oben beschriebenen Durchlauferhitzers. Im Falle eines Heisswassertanks oder Boilers wird gemäss dem Aspekt das heisse Wasser aus ein- und demselben Heisswassertank bzw. Boiler sowohl zum Speisen der Brüheinheit, als auch zum Speisen der Heisswasser-Umgehungsleitung verwendet, je nach Umschaltzustand der Heisswasser-Umschalteinrichtung. Entsprechend wird im Falle eines Durchlauferhitzers gemäss dem Aspekt das heisse Wasser aus ein- und demselben Durchlauferhitzer sowohl zum Speisen der Brüheinheit als auch zum Speisen der Heisswasser-Umgehungsleitung verwendet, je nach Umschaltzustand der Heisswasser-Umschalteinrichtung.

Bei Ausführungsformen der Brühvorrichtung ist die Heisswasser-Umschalteinrichtung ein Ventil, insbesondere ein 2/2-Wege-Magnetventil, das einen Eingang und einen Ausgang hat. In einer Durchlassstellung des Ventils ist der Eingang mit dem Ausgang verbunden. In einer Unterbrechungsstellung des Ventils ist der Eingang nicht mit dem Ausgang verbunden. Der Eingang des Ventils ist mit dem Ausgang der Heisswasser-Zuführungseinrichtung verbunden. In der Unterbrechungsstellung gelangt demnach kein am Eingang des Ventils anstehendes heisses Wasser zum Ausgang des Ventils. Der Ausgang des Ventils ist mit der Heisswasser-Umgehungsleitung verbunden. Eine Leitung stromaufwärts des Eingangs des Ventils stellt eine Verbindung zwischen dem Ausgang der Heisswasser-Zuführungseinrichtung und einem Eingang der Brüheinheit her. Die Verbindung zwischen dem Ausgang der Heisswasser-Zuführungseinrichtung und dem Eingang der Brüheinheit ist insbesondere dauerhaft vorhanden bzw. ist nicht ansteuerbar unterbrechbar.

In der Unterbrechungsstellung des Ventils wird das Heisswasser der Brüheinheit zugeführt. Die während eines Brühvorgangs mit beispielsweise Kaffeepulver gefüllte Brühkammer der Brüheinheit weist einen vergleichsweise hohen Strömungswiderstand auf, während die Heisswasser-Umgehungsleitung einen vergleichsweise kleinen Strömungswiderstand aufweist. In der Durchlassstellung strömt daher ein Grossteil des heissen Wassers, das am Eingang des Ventils anliegt, in die Heisswasser-Umgehungsleitung.

Alternativ ist bei Ausführungsformen der Brühvorrichtung die Heisswasser-Umschalteinrichtung ein Ventil, insbesondere ein 3/2-Wege-Magnetventil, das einen Eingang, einen ersten Ausgang und einen zweiten Ausgang hat. In einer ersten Stellung ist der Eingang mit dem ersten Ausgang verbunden. In einer zweiten Stellung ist der Eingang mit dem zweiten Ausgang verbunden. Der Eingang des Ventils ist mit dem Ausgang der Heisswasser-Zuführungseinrichtung verbunden. Der erste Ausgang des Ventils ist mit der Heisswasser-Umgehungsleitung verbunden. Der zweite Ausgang des Ventils ist mit einem Eingang der Brüheinheit verbunden.

In der ersten Stellung des Ventils strömt das heisse Wasser, das am Eingang des Ventils anliegt, in die Heisswasser-Umgehungsleitung. In der zweiten Stellung des Ventils strömt das heisse Wasser, das am Eingang des Ventils anliegt, in den Eingang der Brüheinheit.

Bei Ausführungsformen der Brühvorrichtung ist die Ansteuereinheit dazu konfiguriert, die Heisswasser-Umschalteinrichtung in mindestens einem Intervall und typischerweise einer Mehrzahl von Intervallen umzuschalten. Jedes Intervall umfasst einen ersten Zeitraum, in welchem die Heisswasser-Umgehungsleitung mit der Heisswasser-Zuführungseinrichtung verbunden ist, und einen zweiten Zeitraum, in welchem die Heisswasser-Umgehungsleitung nicht mit der Heisswasser-Zuführungseinrichtung verbunden ist.

Das Umschalten in mindestens einem Intervall führt dazu, dass das Wasser in der Brüheinheit während des ersten Zeitraums verharrt. Im Falle einer Kaffeezubereitung hat das Brühwasser dadurch eine verlängerte Kontaktzeit mit dem Kaffeepulver in der Brühkammer der Brüheinheit, was dazu beitragen kann die Löslichkeit der Geschmacksstoffe und Aromen zu verbessern.

Im Falle einer Mehrzahl von Intervallen entsteht eine Mehrzahl von Druckpulsationen in der Brüheinheit. Die kann eine Aromaextraktion oder ein Auspressen der Pulverkörper des Kaffeepulvers zusätzlich begünstigen und die Qualität des ausgegebenen Heissgetränks weiter verbessern. Die Druckdifferenz innerhalb einer Druckpulsation beträgt kurzzeitig beispielsweise bis zu 15 bar.

Bei Ausführungsformen der Brühvorrichtung ist das Verhältnis von erstem Zeitraum zu zweitem Zeitraum des Intervalls bzw. der Intervalle vorgegeben oder vorgebbar, und zwar in Abhängigkeit von einer Art des zuzubereitenden Heissgetränks. Beispielsweise kann es vorgesehen sein, bei bestimmten Arten von Heissgetränken wie z. B. Espresso oder Ristretto ein Verhältnis von null vorzugeben, d. h. dass bei diesen Arten das heisse Wasser während des gesamten Zubereitungsvorganges ausschliesslich durch die Brüheinheit geleitet wird und nicht durch die Heisswasser-Umgehungsleitung geleitet wird. Dementsprechend kann es vorgesehen sein, dass bei anderen Arten von Heissgetränken wie z. B. Cafe Americano ein Verhältnis vorgegeben wird, das von null verschieden ist, so dass ein bestimmter Anteil von heissem Wasser während des Zubereitungsvorganges an der Brüheinheit vorbei und durch die Heisswasser-Umgehungsleitung geleitet wird.

Als nicht einschränkende Beispiele beträgt der erste Zeitraum 0,5 Sekunden und der zweite Zeitraum beträgt 0,5 Sekunden; oder der erste Zeitraum beträgt 0,3 Sekunden und der zweite Zeitraum beträgt 0, 6 Sekunden; oder der erste Zeitraum beträgt 1, 0 Sekunden und der zweite Zeitraum beträgt 0, 4 Sekunden. Bei einer Abfolge mehrerer Intervalle folgt typischerweise der erste Zeitraum eines nachfolgenden Intervalls unmittelbar auf den zweiten Zeitraum des jeweiligen vorhergehenden Intervalls.

Bei Ausführungsformen der Brühvorrichtung ist der erste Zeitraum mindestens eines der Intervalle, typischerweise der erste Zeitraum eines jeden Intervalls, kürzer als der zugehörige zweite Zeitraum des jeweiligen Intervalls.

Ausführungsformen der Brühvorrichtung weisen ferner eine Volumenmesseinrichtung auf. Die Volumenmesseinrichtung ist dazu konfiguriert, ein Volumen der in den Heissgetränkeauslass ausgegebenen Flüssigkeit im Zeitverlauf zu messen und die zugehörigen Messwerte an die Ansteuereinheit auszugeben. Die Ansteuereinheit ist ferner dazu konfiguriert, die Heisswasser-Umschalteinrichtung gemäss den Messwerten aus der Volumenmesseinrichtung anzusteuern. Typischerweise wird das Volumen pro Zubereitungsvorgang eines Heissgetränkes gemessen, d. h. das anfängliche Volumen bei Beginn eines Zubereitungsvorgangs wird als 0 angenommen. Die Volumenmesseinrichtung kann das unmittelbar oder mittelbar in den Heissgetränkeauslass ausgegebene Volumen kontinuierlich oder in vorgegebenen oder vorgebbaren Messwertintervallen an die Ansteuereinheit ausgeben.

Weiterhin ist bei Ausführungsformen die Ansteuereinheit ferner dazu konfiguriert, die Heisswasser-Umschalteinrichtung anzusteuern, insbesondere in einer Mehrzahl von Intervallen umzuschalten, wenn gemäss den Messwerten aus der Volumenmesseinrichtung bestimmt wird, dass ein erstes Volumen erreicht ist. Es kann also vorgesehen sein, dass die Ansteuereinheit die Heisswasser-Umschalteinrichtung bei Erreichen eines bestimmten Volumens, des ersten Volumens, umschaltet. Beispielsweise schaltet die Ansteuereinheit die Heisswasser-Umschalteinrichtung bei Erreichen des bestimmten Volumens aus der Stellung, in welcher der die Heisswasser-Umgehungsleitung nicht mit der Heisswasser-Zuführungseinrichtung verbunden ist, in die Stellung um, in welcher die Heisswasser-Umgehungsleitung mit der Heisswasser-Zuführungseinrichtung verbunden ist. Zum Beispiel schaltet die Ansteuereinheit die Heisswasser-Umschalteinrichtung nach Ablauf einer bestimmten Zeit wieder in die Stellung um, in welcher die Heisswasser-Umgehungsleitung nicht mit der Heisswasser-Zuführungseinrichtung verbunden ist.

Es kann auch vorgesehen sein, dass die Ansteuereinheit die Heisswasser-Umschalteinrichtung bei Erreichen des ersten Volumens in Intervallen umschaltet, typischerweise in einer Mehrzahl von Intervallen, wie hierin beschrieben.

Zusätzlich kann es vorgesehen sein, dass die Ansteuereinheit ferner dazu konfiguriert ist, das Ansteuern der Heisswasser-Umschalteinrichtung zu beenden, wenn gemäss den Messwerten aus der Volumenmesseinrichtung bestimmt wird, dass ein zweites Volumen erreicht ist, wobei das zweite Volumen grösser als das erste Volumen ist. Die Ansteuereinheit steuert also in dem Zeitraum ab dem Erreichen des ersten Volumens bis zum Erreichen des zweiten Volumens die Heisswasser-Umschalteinrichtung an.

Dieses Ansteuern kann wiederum vorsehen, dass zu Beginn dieses volumenbezogenen Zeitraums die Ansteuereinheit die Heisswasser-Umschalteinrichtung bei Erreichen des bestimmten Volumens aus der Stellung, in welcher die Heisswasser-Umgehungsleitung nicht mit der Heisswasser-Zuführungseinrichtung verbunden ist, in die Stellung umschaltet, in welcher die Heisswasser-Umgehungsleitung mit der Heisswasser-Zuführungseinrichtung verbunden ist, und nach Ablauf dieses volumenbezogenen Zeitraums wieder in die Stellung umschaltet, in welcher der die Heisswasser-Umgehungsleitung nicht mit der Heisswasser-Zuführungseinrichtung verbunden ist.

Dieses Ansteuern kann aber auch vorsehen, dass zu Beginn dieses volumenbezogenen Zeitraums die Ansteuereinheit die Heisswasser-Umschalteinrichtung bei Erreichen des bestimmten Volumens in Intervallen umschaltet, wie hierin beschrieben, und nach Ablauf dieses volumenbezogenen Zeitraums das intervallweise Umschalten beendet.

Ausführungsformen der Brühvorrichtung sind ferner dazu konfiguriert, der Heisswasser-Umgehungsleitung Dampf zuzuführen. Der Dampf kann insbesondere in Form eines Dampfstosses abgegeben werden. Es kann damit das Leitungssystem hinter der Brüheinheit in Richtung des Heissgetränkeauslasses entleert werden; gleichzeitig werden das Leitungssystem hinter der Brüheinheit und der Heissgetränkeauslass durch den Dampf hygienisch gereinigt. Beispielsweise werden Bakterien durch den Dampf abgetötet.

Gemäss einem Aspekt weist ein Verfahren zum Zubereiten eines Heissgetränks in einer hierin beschriebenen Brühvorrichtung ein Festlegen einer Art des zuzubereitenden Heissgetränks, ein Bestimmen, anhand der Art des zuzubereitenden Heissgetränks, mindestens eines Parameters für die Ansteuerung der Heisswasser-Umschalteinrichtung, und ein Ansteuern, mittels der Ansteuereinheit, der Heisswasser-Umschalteinrichtung gemäss dem mindestens einen Parameter, während der Zubereitung des Heissgetränks auf.

Es ist beispielsweise möglich, dass der Parameter für eine Art des zuzubereitenden Heissgetränks angibt, dass bei der Zubereitung kein Umschalten derart erfolgen soll, dass die Heisswasser-Umgehungsleitung mit der Heisswasser-Zuführungseinrichtung verbunden ist. Dies kann beispielsweise für ein Espresso- oder Ristretto-Getränk gegeben sein. Der Parameter kann auch für eine Art des zuzubereitenden Heissgetränks angeben, dass eine bestimmte Anzahl von Umschaltvorgängen, beispielsweise ein einziger Umschaltvorgang oder eine Mehrzahl von Umschaltintervallen, erfolgen soll, d. h. ein Umschalten derart, dass die Heisswasser-Umgehungsleitung mit der Heisswasser-Zuführungseinrichtung verbunden ist oder dass die Heisswasser-Umgehungsleitung mit der Heisswasser-Zuführungseinrichtung in bestimmten Zeiträumen verbunden ist und in anderen Zeiträumen nicht verbunden ist.

Bei Ausführungsformen des Verfahrens umfasst der Parameter ein Volumen der in den Heissgetränkeauslass ausgegebenen Flüssigkeit. Beispielsweise umfasst der Parameter ein erstes Volumen, bei dessen Erreichen oder Überschreiten ein einmaliges oder mehrmaliges intervallweises Umschalten erfolgt. Zusätzlich umfasst der Parameter beispielsweise ein zweites Volumen, bei dessen Erreichen oder Überschreiten ein mehrmaliges intervallweises Umschalten beendet wird.

Bei Ausführungsformen des Verfahrens umfasst der Parameter alternativ oder zusätzlich einen ersten Zeitraum eines Intervalls, in welchem die Heisswasser-Umgehungsleitung mit der Heisswasser-Zuführungseinrichtung verbunden ist. Alternativ oder zusätzlich umfasst der Parameter einen zweiten Zeitraum eines Intervalls, in welchem die Heisswasser-Umgehungsleitung nicht mit der Heisswasser-Zuführungseinrichtung verbunden ist. Alternativ oder zusätzlich umfasst der Parameter ein Verhältnis des ersten Zeitraums zum zweiten Zeitraum. Alternativ oder zusätzlich umfasst der Parameter eine Veränderung des Verhältnisses des ersten Zeitraums zum zweiten Zeitraum im Zeitverlauf.

Bei Ausführungsformen sieht das Verfahren ferner vor, dass nach Abschluss der Zubereitung des Heissgetränks Dampf, insbesondere in Form eines Dampfstosses, in die Heisswasser-Umgehungsleitung zugeführt wird. Es kann damit das Leitungssystem hinter der Brüheinheit in Richtung des Heissgetränkeauslasses entleert werden; gleichzeitig werden das Leitungssystem hinter der Brüheinheit und der Heissgetränkeauslass durch den Dampf hygienisch gereinigt. Beispielsweise werden Bakterien durch den Dampf abgetötet.

### Kurze Beschreibung der Zeichnungen

Im Folgenden werden Ausführungsformen der Brühvorrichtung und des zugehörigen Verfahrens anhand von Zeichnungen näher erläutert. In den Zeichnungen zeigen:
- Fig. 1: eine schematische Ansicht einer Brühvorrichtung gemäss einer Ausführungsform;
- Fig. 2: eine schematische Ansicht einer Brühvorrichtung gemäss einer weiteren Ausführungsform;
- Fig. 3: Brühparameter im Zeitverlauf eines Brühvorgangs unter Verwendung einer Brühvorrichtung gemäss einer Ausführungsform; und
- Fig. 4: schematische Druckverhältnisse in einer Brühkammer einer Brüheinheit einer Brühvorrichtung gemäss einer Ausführungsform.

### Beschreibung von Ausführungsformen

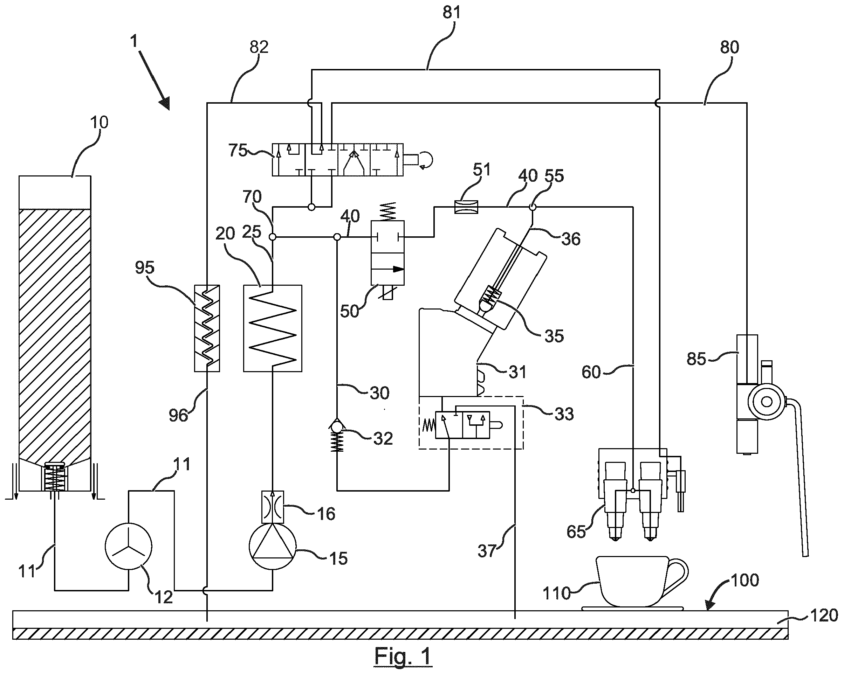

Fig. 1 zeigt in einer schematischen Ansicht eine Brühvorrichtung 1 gemäss einer Ausführungsform. Die Brühvorrichtung 1 umfasst einen Kaltwassertank 10. Eine von dem Kaltwassertank 10 abgehende erste Fluidleitung 11, in welche ein Durchflussmesser 12 eingeschaltet ist, führt das kalte Wasser eine Anordnung aus einer Pumpe 15 und einem Drosselventil 16 zu, von wo es weiter durch einen Durchlauferhitzer 20 in eine zweite Fluidleitung 25 strömt. Die Anordnung aus Pumpe 15, Drosselventil 16 und Durchlauferhitzer 20 bildet gemäss der dargestellten Ausführungsform eine Heisswasser-Zuführeinrichtung, wobei Heisswasser an ihrem Ausgang (dem Ausgang des Durchlauferhitzers) zur Verfügung steht. Die Heisswasser-Zuführungseinrichtung fördert demnach Heisswasser aus einer einzigen Heisswasserquelle.

Über eine dritte Fluidleitung 30 strömt das geförderte Wasser über ein Rückschlagventil 32 an den Eingang einer Brüheinheit 31. Vor dem Eingang der Brüheinheit 31 ist ein Schaltventil 33 vorgesehen, das wahlweise Wasser dem Eingang der Brüheinheit 31 zuführen kann oder eine Restflüssigkeit, die beispielsweise nach dem Abschluss eines Brühvorgangs in einer Brühkammer der Brüheinheit 31 entsteht, aus der Brühkammer der Brüheinheit 31 über eine Drainageleitung 37 in einen Restflüssigkeitsbehälter 120 abführen kann.

Ein Schaltventil 75 kann derart umgeschaltet werden, dass ein Fluid (Heisswasser oder Dampf) aus einer mit der zweiten Fluidleitung 25 verbundenen fünften Fluidleitung 70 wahlweise (über eine mit dem Schaltventil 75 verbundene Fluidleitung 81) an einen Heisswasserauslauf 90, (über eine mit dem Schaltventil 75 verbundene Fluidleitung 80) an eine Milchaufschäumeinrichtung 85 oder (über eine mit dem Schaltventil 75 verbundene Fluidleitung 82) an eine Kondensationseinrichtung 95 abgegeben werden kann. Aus der Kondensationseinrichtung 95 kann kondensiertes Wasser durch eine weitere Fluidleitung 96 abfliessen.

An einem Ausgang der Brühkammer der Brüheinheit 31 ist ein Crema-Ventil 35 vorgesehen, um den Abfluss von Fluid aus der Brühkammer in eine Fluidausgangsleitung 36 zu kontrollieren. Das Fluid aus der Brühkammer, typischerweise also das zubereitete Heissgetränk wie beispielsweise ein Kaffeegetränk, strömt durch die Fluidausgangsleitung 36 und eine später noch beschriebene Mischeinrichtung 55 in eine Kaffeeausgabeleitung 60 und von dort aus in einen Kaffeeauslauf 65, der einen Heissgetränkeauslass bildet.

Auf einer Trinkgefäss-Ablage 100 ist unterhalb des Kaffeeauslaufs 65 ein Trinkgefäss 110 platzierbar, um das zubereitete Heissgetränk entgegenzunehmen.

Stromabwärts der zweiten Fluidleitung 25, also des Ausgangs der Heisswasser-Zuführungseinrichtung, und hinter einem Verzweigungspunkt, von welchem die dritte Fluidleitung zur Zufuhr von Heisswasser an die Brüheinheit 31 abgeht, ist eine vierte Fluidleitung 40 vorgesehen, welche eine Heisswasser-Umgehungsleitung bildet. In die vierte Fluidleitung 40 ist eine ansteuerbare Heisswasser-Umschalteinrichtung eingeschaltet, die in der Ausführungsform gemäss Fig. 1 ein 2/2-Wege-Magnetventil 50 ist. In der Ausführungsform gemäss Fig. 1 ist demnach die dritte Fluidleitung permanent mit der zweiten Fluidleitung 25 verbunden.

Das Ventil 50 ist umschaltbar zwischen einer Durchlassstellung und einer Unterbrechungsstellung. Das Umschalten erfolgt selektiv während eines Brühvorgangs mittels einer geeigneten Ansteuereinheit (nicht dargestellt). Während des Brühvorgangs ist der Strömungswiderstand am Eingang der Brüheinheit 31 vergleichsweise hoch. In der Unterbrechungsstellung des Ventils 50, die in Fig. 1 gezeigt ist, ist das Ventil nicht durchlässig. Dementsprechend strömt das heisse Wasser ausschliesslich zum Eingang der Brüheinheit 31. In der Durchlassstellung hingegen strömt aufgrund des grossen Strömungswiderstandes ein Grossteil des heissen Wassers durch das Ventil 50, und weiter über ein Drosselventil 51 zur Mischeinrichtung 55.

Die Mischeinrichtung 55 umfasst eine (in den Figuren nicht dargestellte) Mischkammer, welche sowohl mit der Fluidausgangsleitung 36 als auch mit der vierten Fluidleitung 40 derart verbunden ist, dass ein Fluid, welches von der Brüheinheit 31 über die Fluidausgangsleitung 36 zur Mischeinrichtung 55 strömt, sich mit einem Fluid, welches vom Ventil 50 über die vierte Fluidleitung 40 zur Mischeinrichtung 55 strömt, in der Mischkammer der Mischeinrichtung 55 vermischen kann. Ein Ausgang der Mischkammer der Mischeinrichtung 55 mündet in die Kaffeeausgabeleitung 60, sodass ein Fluid aus der Mischkammer der Mischeinrichtung 55 über die Kaffeeausgabeleitung 60 in den Kaffeeauslauf 65 gelangt.

Dadurch kann - je nach Stellung des Ventils 50 - ein Teil des heissen Wassers an der Brüheinheit 31 vorbeigeleitet werden, und es kann eine gute Qualität des ausgegebenen Heissgetränks selbst bei einer grossen Bezugsmenge gewährleistet werden.

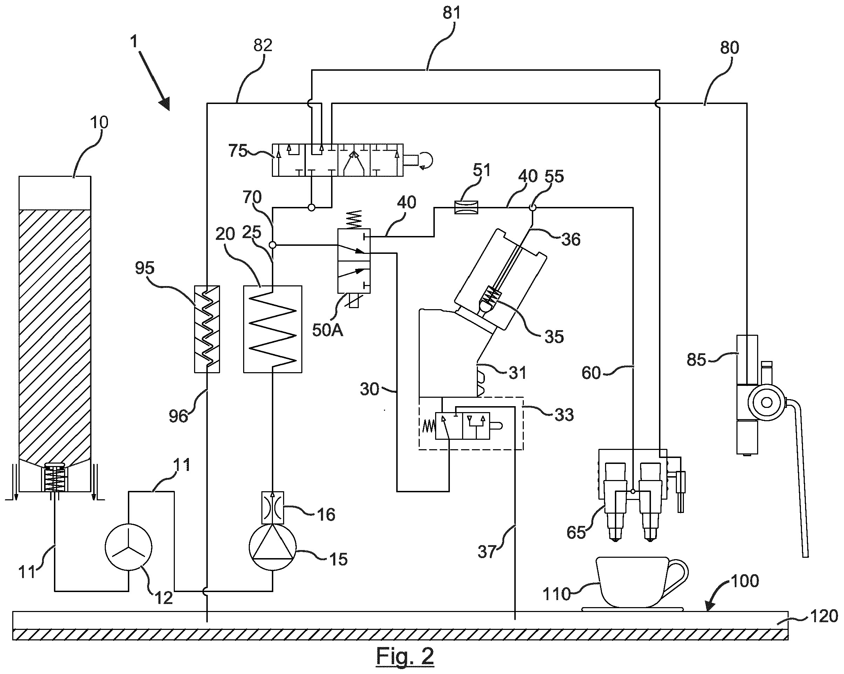

Fig. 2 zeigt eine alternative Ausführungsform, wobei gleiche Bezugszeichen die gleichen oder ähnliche Teile wie in Fig. 1 angeben und deren Beschreibung hier weggelassen ist.

In der Ausführungsform gemäss Fig. 2 ist statt des Ventils 50 ein Ventil 50A vorgesehen, das als 3/2-Wege-Magnetventil ausgebildet ist und einen Eingang sowie zwei Ausgänge hat. Der Eingang des Ventils 50A ist mit der zweiten Fluidleitung 25 und somit mit dem Ausgang der Heisswasser-Zuführeinrichtung (bzw. dem Ausgang des Durchlauferhitzers 20) verbunden. Der erste Ausgang des Ventils 50A ist stromabwärts mit der vierten Fluidleitung 40 verbunden, welche eine Heisswasser-Umgehungsleitung bildet. Der zweite Ausgang des Ventils 50A ist mit dem Eingang der Brüheinheit 31 über die dritte Fluidleitung 30 verbunden. In der ersten Stellung des Ventils 50A ist der Eingang des Ventils 50A mit dem ersten Ausgang des Ventils 50A verbunden; entsprechend ist in der zweiten Stellung des Ventils 50A der Eingang des Ventils 50A mit dem zweiten Ausgang des Ventils 50A verbunden. Das Ventil 50A kann also zwischen einer Ausgabe des heissen Wassers an die vierte Fluidleitung 40 und an den Eingang der Brüheinheit 31 umschalten.

In der Ausführungsform gemäss Fig. 2 ist also in einer der beiden Stellungen des Ventils 50A die dritte Fluidleitung 30 zur Zufuhr von Heisswasser in die Brüheinheit mit der zweiten Fluidleitung 25, also dem Ausgang der Heisswasser-Zuführungseinrichtung verbunden, und die vierte Fluidleitung 40 ist stromabwärts des Ventils 50A gesperrt. In der anderen der beiden Stellungen des Ventils 50A ist die vierte Fluidleitung 40 mit der zweiten Fluidleitung 25, also dem Ausgang der Heisswasser-Zuführungseinrichtung verbunden, und die dritte Fluidleitung 30 zur Zufuhr von Heisswasser in die Brüheinheit 31 ist gesperrt.

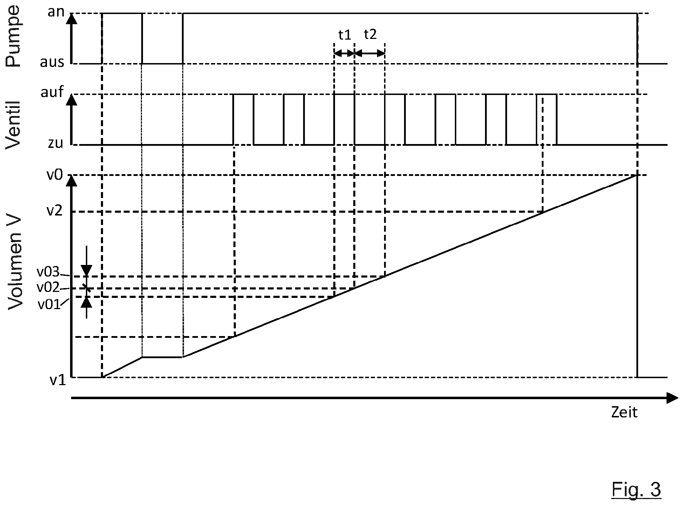

Fig. 3 zeigt verschiedene Parameter der Brühvorrichtung 1 während des Zeitverlaufs eines Brühvorgangs.

Im oberen Teil von Fig. 3 ist der Betrieb der Pumpe 15 mit zwei Zuständen (eingeschaltet bzw. ausgeschaltet) dargestellt.

Im mittleren Teil von Fig. 3 ist die Stellung des Ventils 50 aus der Ausführungsform gemäss Fig. 1 dargestellt; die Ventilposition "auf" entspricht dabei einer Stellung, in welcher die Heisswasser-Umgehungsleitung mit der Heisswasser-Zuführungseinrichtung verbunden ist, und die Ventilposition "zu" entspricht einer Stellung, in welcher die Heisswasser-Umgehungsleitung nicht mit der Heisswasser-Zuführungseinrichtung verbunden ist.

Im unteren Teil von Fig. 3 ist schematisch der Verlauf des am Heissgetränkeauslass ausgegebenen Fluidvolumens V dargestellt.

Zunächst ist das Ventil 50 geschlossen. Die Pumpe 15 wird eingeschaltet und mit konstanter Leistung betrieben, nach einem gewissen Zeitraum wieder ausgeschaltet, anschliessend wieder eingeschaltet. Bei diesem Vorbrühvorgang steigt das Volumen des geförderten Brühwassers während der Einschaltzeiten der Pumpe 15 linear an, d. h. bei konstantem Volumenstrom wird der Brüheinheit 31 Brühwasser zugeführt, um das Kaffeepulver in der Brühkammer der Brüheinheit 31 zu benetzen. Während der Ausschaltzeit kann sich das in die Brüheinheit 31 geförderte Wasser im Kaffeepulver verteilen, und das Crema-Ventil 35 der Brüheinheit 31 ist geschlossen, so dass während dieses Zeitraums ein Kaffeegetränk noch nicht ausgegeben wird.

Anschliessend wird die Pumpe wieder bis zum Ende des Brühvorganges mit konstanter Leistung im Einschaltzustand betrieben. Das Volumen V des geförderten Brühwassers steigt wiederum linear an, bis ein Volumen v0 erreicht ist und der Brühvorgang endet.

Das Ventil 50 wird abhängig vom Volumen V angesteuert. Das Ventil wird in der Ausführungsform beispielhaft derart angesteuert, dass das Ventil 50 geschlossen ist, solange das Volumen kleiner als ein erster Schwellenwert v1 ist. Sobald der erste Schwellenwert v1 erreicht ist, wird das Ventil 50 geöffnet, und heisses Wasser fliesst durch die vierte Fluidleitung 40, an der Brüheinheit 31 vorbei, direkt in den Kaffeeauslass 65.

Das Ventil 50 wird in dem gezeigten Beispiel in Intervallen mit jeweils einem ersten Zeitraum t1 (Ventil geöffnet) und einem zweiten Zeitraum t2 (Ventil geschlossen) angesteuert, d. h. impulsweise. Die Gesamtzahl von Zeiträumen, in denen das Ventil 50 während der ersten Zeiträume t1 geöffnet ist, kann beispielsweise bei vorgegebenen Parametern t1 und t2 in Abhängigkeit des Volumens des geförderten Brühwassers bestimmt werden. Alternativ kann das Ventil 50 derart als Funktion des Volumens V gesteuert werden, dass es geöffnet oder geschlossen wird, wenn das Volumen V bestimmte vorgegebene Schwellwerte erreicht. Im Beispiel gemäss Fig. 3 wird das Ventil 50 beispielsweise geöffnet, wenn das Volumen V den Wert v01 erreicht, und anschliessend wieder geschlossen, wenn das Volumen V den Wert v02 erreicht, und danach wieder geöffnet, wenn das Volumen V den Wert v03 erreicht. Im vorliegenden Beispiel ist angenommen, dass die Pumpleistung der Pumpe 15 und somit der Volumenstrom des von der Pumpe 15 geförderten Wassers konstant ist, wenn die Pumpe 15 angeschaltet ist. In diesem Fall ist die Dauer des Zeitraums t1 proportional zur Volumendifferenz v02-v01 und die Dauer des Zeitraums t2 proportional zur Volumendifferenz v03-v02.

Im vorliegenden Beispiel wird der Zeitpunkt, ab dem das Ventil 50 ständig bis zum Ende des Brühvorgangs geschlossen gehalten wird, wie folgt bestimmt. Vorgegeben wird ein zweiter Schwellenwert v2 für das Volumen V. Sobald das Volumen V den Schwellenwert v2 erreicht, wird geprüft, ob das Ventil 50 gerade geöffnet ist. Falls das Ventil 50 gerade geöffnet ist (in Fig. 3 nicht dargestellt), bleibt das Ventil 50 bis zum Ende der zuletzt erfolgten pulsweisen Ansteuerung der Dauer des ersten Zeitraums t1 noch geöffnet; anschliessend wird das Ventil 50 geschlossen und bleibt bis zum Ende des Brühvorgangs geschlossen.

Wenn das Volumen V den Wert v0 erreicht, ist das Ende des Brühprozesses erreicht, und die Pumpe 15 wird abgeschaltet.

Im Beispiel gemäss Fig. 3 wird das Ventil 50 durch mehrere Impulse der Dauer t1 wiederholt angesteuert und dementsprechend periodisch wiederkehrend geöffnet und geschlossen. Es ist alternativ auch denkbar, das Ventil 50 nur während eines einzigen Zeitintervalls, mit einer Zeitdauer t1, welche einem Bruchteil der Dauer eines Kaffeebezugs entspricht, im Verlauf eines Brühprozesses zu öffnen und ansonsten geschlossen zu halten. Dieses einmalige Öffnen des Ventils 50 kann zu einem beliebigen Zeitpunkt während des Brühvorgangs erfolgen, z.B. am Anfang des jeweiligen Brühvorgangs oder am Ende jeweiligen Brühvorgangs oder an einem anderen Zeitpunkt zwischen dem Anfang und dem Ende des jeweiligen Brühvorgangs.

Im Falle der Ausführungsform gemäss Fig. 2 kann die Steuerung von Pumpe 15 und Ventil 50A analog zur Darstellung gemäss Fig. 3 erfolgen. Das Ventil 50A gemäss Fig. 2 kann impulsweise angesteuert werden mit denselben Impulsfolgen wie das Ventil 50 in Fig. 3. Wird das Ventil 50A impulsweise mit Impulsen der Dauer t1 und Abständen der Dauer t2 zwischen zwei aufeinanderfolgenden Impulsen angesteuert, so wird das Ventil 50A periodisch abwechselnd in zwei verschiedene Zustände gebracht, bei denen abwechselnd die dritte Fluidleitung 30 zur Zufuhr von Heisswasser in die Brüheinheit 31 mit der zweiten Fluidleitung 25 verbunden und die vierte Fluidleitung 40 stromabwärts des Ventils 50A gesperrt ist, oder die vierte Fluidleitung 40 mit der zweiten Fluidleitung 25 verbunden und die dritte Fluidleitung 30 zur Zufuhr von Heisswasser in die Brüheinheit 31 gesperrt ist.

Demensprechend fliesst das durch die zweite Fluidleitung 25 geförderte Heisswasser während der impulsweisen Ansteuerung des Ventils 50A abwechselnd durch die dritte Fluidleitung 30 oder durch die vierte Fluidleitung 40.

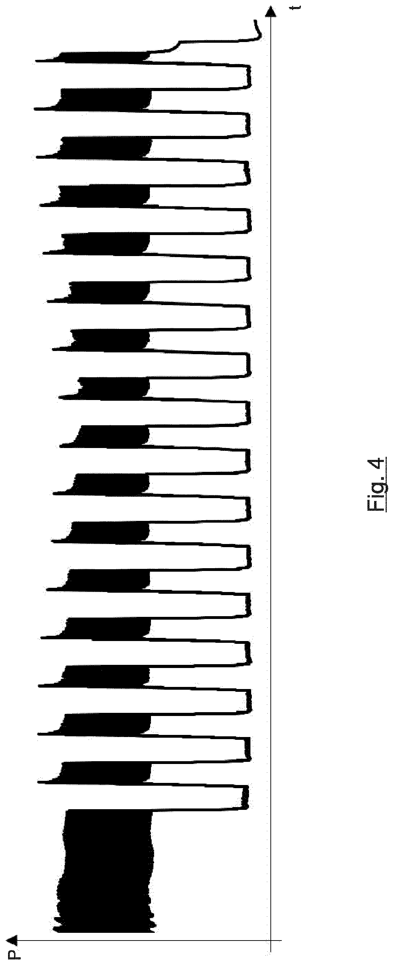

Fig. 4 zeigt den Druck des Brühwassers in der Brühkammer der Brüheinheit 31 als Funktion der Zeit t während eines Kaffeebezugs im Anschluss an das Vorbrühen, bei kontinuierlich arbeitender Pumpe 15 und impulsweiser Ansteuerung des Ventils 50 bzw. des Ventils 50A mit Impulsen der Dauer t1 und dem zeitlichen Abstand t2 zwischen zwei aufeinanderfolgenden Impulsen.

Die Pumpe 15 arbeitet während des Kaffeebezugs mit maximaler Leistung und ist typischerweise dazu ausgelegt, einen Druck von typischerweise 15 bar zu erzeugen.

Wenn die vierte Fluidleitung 40 mit der Heisswasser-Zuführungseinrichtung verbunden ist, sinkt der Druck des Brühwassers in der Brühkammer der Brüheinheit 31. Die Grösse des Druckabfalls während eines Impulses der Zeitdauer t1 hängt von der Grösse von t1 ab, also der Zeitspanne, während der die vierte Fluidleitung 40 jeweils mit der Heisswasser-Zuführungseinrichtung verbunden ist. Ist t1 gross (z.B. grösser als 1 Sekunde), kann der Druck des Brühwassers in der Brühkammer auf ungefähr 0 bar fallen, wenn das Ventil 50 bzw. das Ventil 50A die Fluidleitung 40 freigibt.

## Patentansprüche

1. Brühvorrichtung (1) zum Zubereiten eines Heissgetränks, insbesondere Kaffeeautomat, wobei die Brühvorrichtung (1) folgendes aufweist:
eine Heisswasser-Zuführungseinrichtung (12, 15, 16, 20);
eine Brüheinheit (31), konfiguriert zum Entgegennehmen von Heisswasser von der Heisswasser-Zuführungseinrichtung (12, 15, 16, 20) und zum Ausgeben eines gebrühten Heissgetränks in einen Heissgetränkeauslass (65);
eine Heisswasser-Umgehungsleitung (40), konfiguriert zum Ausgeben von Heisswasser aus der gleichen Heisswasser-Zuführungseinrichtung (12, 15, 16, 20) in den Heissgetränkeauslass (65);
eine ansteuerbare Heisswasser-Umschalteinrichtung (50, 50A), die dazu konfiguriert ist, die Heisswasser-Umgehungsleitung (40) zeitweise mit der Heisswasser-Zuführungseinrichtung (12, 15, 16, 20) zu verbinden;
eine Ansteuereinheit zum Ansteuern der Heisswasser-Umschalteinrichtung (50, 50A).

2. Brühvorrichtung (1) nach Anspruch 1, wobei die Heisswasser-Zuführungseinrichtung (12, 15, 16, 20) dazu konfiguriert ist, Heisswasser aus einer einzigen Heisswasserquelle zu fördern.

3. Brühvorrichtung (1) nach einem der vorhergehenden Ansprüche, wobei die Heisswasser-Umschalteinrichtung (50, 50A) ein Ventil ist, insbesondere eine 2/2-Wege-Magnetventil, mit einem Eingang, einem Ausgang, einer Durchlassstellung, in welcher der Eingang mit dem Ausgang verbunden ist, und einer Unterbrechungsstellung, in welcher der Eingang nicht mit dem Ausgang verbunden ist, wobei der Eingang des Ventils mit dem Ausgang der Heisswasser- Zuführungseinrichtung (12, 15, 16, 20) verbunden ist, wobei der Ausgang des Ventils mit der Heisswasser-Umgehungsleitung (40) verbunden ist, und wobei eine Leitung stromaufwärts des Eingangs des Ventils eine Verbindung zwischen dem Ausgang der Heisswasser-Zuführungseinrichtung (12, 15, 16, 20) und einem Eingang der Brüheinheit (31) herstellt.

4. Brühvorrichtung (1) nach Anspruch 1 oder 2, wobei die Heisswasser-Umschalteinrichtung (50, 50A) ein Ventil ist, insbesondere ein 3/2-Wege-Magnetventil, mit einem Eingang, einem ersten Ausgang, einem zweiten Ausgang, einer ersten Stellung, in welcher der Eingang mit dem ersten Ausgang verbunden ist, und einer zweiten Stellung, in welcher der Eingang mit dem zweiten Ausgang verbunden ist, wobei der Eingang des Ventils mit dem Ausgang der Heisswasser- Zuführungseinrichtung (12, 15, 16, 20) verbunden ist, wobei der erste Ausgang des Ventils mit der Heisswasser-Umgehungsleitung (40) verbunden ist, und wobei der zweite Ausgang des Ventils mit einem Eingang der Brüheinheit (31) verbunden ist.

5. Brühvorrichtung (1) nach einem der vorhergehenden Ansprüche, wobei die Ansteuereinheit dazu konfiguriert ist, die Heisswasser-Umschalteinrichtung (50, 50A) in mindestens einem Intervall und typischerweise einer Mehrzahl von Intervallen umzuschalten, wobei jedes Intervall einen ersten Zeitraum (t1) umfasst, in welchem die Heisswasser-Umgehungsleitung (40) mit der Heisswasser-Zuführungseinrichtung (12, 15, 16, 20) verbunden ist, und einen zweiten Zeitraum (t2) umfasst, in welchem die Heisswasser-Umgehungsleitung (40) nicht mit der Heisswasser-Zuführungseinrichtung (12, 15, 16, 20) verbunden ist.

6. Brühvorrichtung (1) nach Anspruch 5, wobei das Verhältnis von dem ersten Zeitraum (t1) zu dem zweiten Zeitraum (t2) in Abhängigkeit von einer Art des zuzubereitenden Heissgetränks vorgegeben oder vorgebbar ist.

7. Brühvorrichtung (1) nach Anspruch 5 oder 6, wobei der erste Zeitraum (t1) mindestens eines der Intervalle, typischerweise der erste Zeitraum (t1) eines jeden Intervalls, kürzer ist als der zugehörige zweite Zeitraum (t2) des jeweiligen Intervalls.

8. Brühvorrichtung (1) nach einem der vorhergehenden Ansprüche, die ferner eine Volumenmesseinrichtung (12) aufweist, die dazu konfiguriert ist, ein Volumen (V) der in den Heissgetränkeauslass (65) ausgegebenen Flüssigkeit im Zeitverlauf zu messen und die zugehörigen Messwerte an die Ansteuereinheit auszugeben, wobei die Ansteuereinheit ferner dazu konfiguriert ist, die Heisswasser-Umschalteinrichtung (50, 50A) gemäss den Messwerten aus der Volumenmesseinrichtung (12) anzusteuern.

9. Brühvorrichtung (1) nach Anspruch 8, wobei die Ansteuereinheit ferner dazu konfiguriert ist, die Heisswasser-Umschalteinrichtung (50, 50A) anzusteuern, insbesondere in einer Mehrzahl von Intervallen umzuschalten, wenn gemäss den Messwerten aus der Volumenmesseinrichtung (12) bestimmt wird, dass ein erstes Volumen (v1) erreicht ist.

10. Brühvorrichtung (1) nach Anspruch 9, wobei die Ansteuereinheit ferner dazu konfiguriert ist, das Ansteuern der Heisswasser-Umschalteinrichtung (50, 50A) zu beenden, wenn gemäss den Messwerten aus der Volumenmesseinrichtung (12) bestimmt wird, dass ein zweites Volumen (v2) erreicht ist, wobei das zweite Volumen (v2) grösser als das erste Volumen (v1) ist.

11. Brühvorrichtung (1) nach einem der vorhergehenden Ansprüche, wobei die Brühvorrichtung (1) ferner dazu konfiguriert ist, der Heisswasser-Umgehungsleitung (40) Dampf, insbesondere in Form eines Dampfstosses, zuzuführen.

12. Verfahren zum Zubereiten eines Heissgetränks, insbesondere Kaffeegetränks, in einer Brühvorrichtung (1) nach einem der vorhergehenden Ansprüche, wobei das Verfahren aufweist:
- Festlegen einer Art des zuzubereitenden Heissgetränks;
- Bestimmen, anhand der Art des zuzubereitenden Heissgetränks, mindestens eines Parameters für die Ansteuerung der Heisswasser-Umschalteinrichtung (50, 50A); und
- Ansteuern, mittels der Ansteuereinheit, der Heisswasser-Umschalteinrichtung (50, 50A) gemäss dem mindestens einen Parameter, während der Zubereitung des Heissgetränks.

13. Verfahren nach Anspruch 12, wobei der Parameter eine oder mehrere der folgenden Grössen umfasst: Volumen (V) der in den Heissgetränkeauslass (65) ausgegebenen Flüssigkeit; erster Zeitraum (t1) eines Intervalls, in welchem die Heisswasser-Umgehungsleitung (40) mit der Heisswasser-Zuführungseinrichtung (12, 15, 16, 20) verbunden ist; zweiter Zeitraum (t2) eines Intervalls, in welchem die Heisswasser-Umgehungsleitung (40) nicht mit der Heisswasser-Zuführungseinrichtung (12, 15, 16, 20) verbunden ist; Verhältnis des ersten Zeitraums (t1) zum zweiten Zeitraum (t2); Veränderung des Verhältnisses des ersten Zeitraums (t1) zum zweiten Zeitraum (t2) im Zeitverlauf.

14. Verfahren nach einem der Ansprüche 12 bis 13, wobei das Verfahren ferner aufweist:
- Nach Abschluss der Zubereitung des Heissgetränks: Zuführen von Dampf, insbesondere eines Dampfstosses, in die Heisswasser-Umgehungsleitung (40).
